# EUROPÄISCHE PATENTANMELDUNG

(11) **EP 1 933 047 A2**
(43) Veröffentlichungstag der Anmeldung: **18.06.2008**
(21) Anmeldenummer: 07023192.3
(22) Anmeldetag: 30.11.2007
(51) Int. Cl.: F16C 19/16, F16C 33/41, F16C 33/76

(54) **Schrägkugellager und Torsionsschwingungsdämpferanordnung mit solchem Lager**

(30) Priorität: 13.12.2006 DE 102006058665
(71) Anmelder: ZF Friedrichshafen AG, 88038 Friedrichshafen (DE)
(72) Erfinder: Obergfell, Ralf, 97497 Dingolshausen (DE); Reuter, Klaus, 97723 Oberthulba (DE); Schierling, Bernhard, 97273 Kürnach (DE); Rieß, Thomas, 97437 Haßfurt (DE); Rumpel, Stefan, 97502 Euerbach (DE); Manger, Alexander, 97508 Grettstadt (DE); Schauder, Benedikt, Dr., 97532 Üchtelhausen-Weipoltshausen (DE); Rauch, Peter, 97688 Bad Kissingen (DE)

(57) **Zusammenfassung**

Ein Schrägkugellager, insbesondere zur Axialabstützung einer Primärseite einer Torsionsschwingungsdämpferanordnung bezüglich einer Sekundärseite der Torsionsschwingungsdämpferanordnung in einem Fahrzeugantriebsstrang, umfassend einen ersten Lagerring (62) mit einer ringartigen inneren Schräglagerfläche (64), einen zweiten Lagerring (66) mit einer ringartigen äußeren Schräglagerfläche (68), welche der inneren Schräglagerfläche (64) radial außen und mit axialem Versatz gegenüber liegt, eine Mehrzahl von in Umfangsrichtung aufeinander folgenden Lagerkugeln (70), welche zwischen der inneren Schräglagerfläche (64) und der äußeren Schräglagerfläche (68) angeordnet sind, einen Kugelkranzkäfig (84) mit einem ringartigen Käfigkörper (86) und von diesem ausgehenden und zwischen benachbarte Lagerkugeln (70) eingreifenden Eingriffsabschnitten (88), wobei radial außerhalb des ersten Lagerrings (62) an einer ersten axialen Seite der Lagerkugeln (70) ein äußerer erster Lagerinnenraum (78) gebildet ist und wobei an der anderen axialen Seite der Lagerkugeln (70) ein innerer zweiter Lagerraum (80) gebildet ist und wobei der äußere erste Lagerinnenraum (78) durch ein von dem zweiten Lagerring (66) auf einen Außenumfangsbereich (82) des ersten Lagerrings (62) sich zu erstreckendes erstes Abschirmungselement (90) begrenzt ist, wobei zwischen dem Außenumfangsbereich (82) des ersten Lagerrings (62) und dem diesem nahen Ende (96) des ersten Abschirmungselements (90) eine Dichtabschlussformation wirkt zum im Wesentlichen fluiddichten Abschließen des inneren ersten Lagerinnenraums ist dadurch gekennzeichnet, dass die Dichtabschlussformation ein ringartiges, elastisches erstes Dichtelement (98) umfasst, das am Außenumfangsbereich (82) des ersten Lagerrings (62) mit einer Mehrzahl von axial benachbarten Dichtlippenabschnitten (102, 104) anliegt.

## Beschreibung

Die vorliegende Erfindung betrifft ein Schrägkugellager, welches beispielsweise in einer Torsionsschwingungsdämpferanordnung für einen Antriebsstrang, wie z. B. Zweimassenschwungrad, dazu genutzt wird, eine Primärseite bezüglich einer Sekundärseite zu lagern. Weiter betrifft die vorliegende Erfindung eine Torsionsschwingungsdämpferanordnung für den Antriebsstrang eines Fahrzeugs, welche ein derartiges Schrägkugellager enthält.

Aus der DE 10 2005 008 007 A1 ist eine als Zweimassenschwungrad ausgebildete Torsionsschwingungsdämpferanordnung für den Antriebsstrang eines Fahrzeugs bekannt. Diese umfasst eine Primärseite mit einem Deckscheibenelement, das durch Schraubbolzen an einer Antriebswelle, also beispielsweise einer Kurbelwelle einer Brennkraftmaschine, festzulegen ist. Ein weiteres Deckscheibenelement begrenzt mit dem erstgenannten Deckscheibenelement radial außen einen Aufnahmeraum für die Dämpferelementenanordnung, welche mit einer Mehrzahl von Schraubendruckfedern ausgebildet ist. Zwischen die beiden Deckscheibenelemente greift zur Wechselwirkung mit der Dämpferelementenanordnung ein Zentralscheibenelement der Sekundärseite der Torsionsschwingungsdämpferanordnung ein. Dieses ist in seinem radial inneren Endbereich mit einer ringartigen Schwungmasse durch Vernietung fest verbunden, welche zur Festlegung einer Druckplattenbaugruppe und weiterhin zur Bereitstellung einer Reibfläche für eine Kupplungsscheibe dient. Diese Schwungmasse ist nach radial innen über den radialen Bereich der Anschraubung an die Antriebswelle verlängert. Zwischen den radial inneren Endbereichen des erstgenannten Deckscheibenelements und der Schwungmasse liegt ein als Schrägkugellager ausgebildetes Wälzkörperlager. Dieses Schrägkugellager lagert die Primärseite und die Sekundärseite in axialer Richtung bezüglich einander.

Zwischen einem innerhalb dieses Schrägkugellagers sich axial auf die ringartige Schwungmasse zu erstreckenden und diese auch radial innen übergreifenden Lageransatz des Deckscheibenelements der Primärseite und der Innenumfangsfläche der ringartigen Schwungmasse liegt ein als Gleitlager ausgebildetes Radiallager, durch welches die Primärseite und die Sekundärseite in radialer Richtung bezüglich abgestützt sind.

Das Schrägkugellager ist mit zwei Lagerringen ausgebildet. Ein innerer Lagerring stellt eine schräg nach radial außen orientierte ringartige innere Lagerfläche bereit. Ein äußerer Lagerring stellt eine in entgegengesetzte Richtung orientierte ringartige äußere Lagerfläche bereit. Diese beiden Lagerflächen sind also radial gestaffelt und mit axialem Versatz zueinander angeordnet. Zwischen diesen beiden ringartigen Lagerflächen sind die Lagerkugeln gehalten, welche wiederum durch einen Kugelkranzkäfig in Umfangsabstand zueinander gehalten sind. Der Kugelkranzkäfig weist einen ringartigen Käfigkörper auf, der radial innerhalb des äußeren Lagerrings und axial im Wesentlichen neben dem inneren Lagerring angeordnet ist. In einem Lagerinnenraum, welcher im Wesentlichen radial außerhalb des inneren Lagerrings und axial neben dem äußeren Lagerring gebildet ist, kann sich im Rotationsbetrieb in dem Schrägkugellager enthaltenes Schmiermittel, also Schmierfett oder dergleichen, fliehkraftbedingt ansammeln. Dieses in diesem Bereich sich ansammelnde Schmiermittel wird durch die Rotation der Kugeln aufgenommen und wieder nach radial innen transportiert, so dass ein Schmiermittelkreislauf gebildet wird. Dieser Lagerinnenraum ist durch ein bezüglich des äußeren Lagerrings festgelegtes Abschirmungselement begrenzt, das durch ein elastisches Dichtelement oder eine Spaltdichtung in Verbindung mit dem inneren Lagerring einen im Wesentlichen fluiddichten Abschluss erzeugt.

Es ist die Aufgabe der vorliegenden Erfindung, ein Schrägkugellager, insbesondere für den Einsatz in einer Torsionsschwingungsdämpferanordnung bereitzustellen, mit welchem eine verbesserte Lagerungsfunktionalität erreicht wird.

Erfindungsgemäß wird diese Aufgabe gelöst durch ein Schrägkugellager, insbesondere zur Axialabstützung einer Primärseite einer Torsionsschwingungsdämpferanordnung bezüglich einer Sekundärseite der Torsionsschwingungsdämpferanordnung in einem Antriebsstrang, welches grundsätzlich umfasst:
- einen ersten Lagerring mit einer ringartigen inneren Schräglagerfläche,
- einen zweiten Lagerring mit einer ringartigen äußeren Schräglagerfläche, welche der inneren Schräglagerfläche radial außen und mit axialem Versatz gegenüber liegt,
- eine Mehrzahl von in Umfangsrichtung aufeinander folgenden Lagerkugeln, welche zwischen der inneren Schräglagerfläche und der äußeren Schräglagerfläche angeordnet sind,
- einen Kugelkranzkäfig mit einem ringartigen Käfigkörper und von diesem ausgehenden und zwischen benachbarte Lagerkugeln eingreifenden Eingriffsabschnitten,
wobei radial außerhalb des ersten Lagerrings an einer ersten axialen Seite der Lagerkugeln ein äußerer erster Lagerinnenraum gebildet ist und wobei an der anderen axialen Seite der Lagerkugeln ein innerer zweiter Lagerraum gebildet ist und wobei der äußere erste Lagerinnenraum durch ein von dem zweiten Lagerring auf einen Außenumfangsbereich des ersten Lagerrings sich zu erstreckendes erstes Abschirmungselement begrenzt ist, wobei zwischen dem Außenumfangsbereich des ersten Lagerrings und dem diesem nahen Ende des ersten Abschirmungselements eine Dichtabschlussformation wirkt zum im Wesentlichen fluiddichten Abschließen des inneren ersten Lagerinnenraums.

Gemäß einem ersten Aspekt ist dieses Schrägkugellager dadurch gekennzeichnet, dass die Dichtabschlussformation ein ringartiges, elastisches erstes Dichtelement umfasst, das am Außenumfangsbereich des ersten Lagerrings mit einer Mehrzahl von axial benachbarten Dichtlippenabschnitten anliegt.

Durch das Bereitstellen eines Dichtelements, das mit mehreren axial benachbarten Dichtlippenabschnitten am Außenumfangsbereich des ersten Lagerrings anliegt, wird vor allem unter Berücksichtigung der auf das Dichtelement einwirkenden Fliehkräfte eine deutlich bessere Dichtfunktion erzielt. Die Gefahr von Schmiermittelleckagen aus dem Bereich des Schräglagers heraus wird vermieden mit der Folge, dass keine durch Schmiermittelverluste induzierten Defizite in der Schmierung der Lagerkugeln bzw. der Schräglagerflächen erzeugt werden.

Bei der vorteilhaften Ausgestaltungsform kann vorgesehen sein, dass das Dichtelement an dem Außenumfangsbereich mit zwei Dichtlippen anliegt.

Gemäß einem weiteren Aspekt wird die eingangs genannte Aufgabe gelöst durch ein Schrägkugellager, das den gleichen grundsätzlichen Aufbau aufweist, wie vorangehend beschrieben. Erfindungsgemäß ist dieses Schrägkugellager weiter dadurch gekennzeichnet, dass das erste Abschirmungselement winkelartig ausgebildet ist und mit einem ersten Schenkelbereich sich auf den Außenumfangsbereich des ersten Lagerrings zu erstreckt und mit einem zweiten Schenkelbereich den zweiten Lagerring radial außen in axialer Richtung übergreift und dass ein ringartiges, elastisches zweites Dichtelement einen im Wesentlichen fluiddichten Abschluss zwischen dem ersten Abschirmungelement und dem zweiten Lagerring erzeugt.

Durch das Einführen des zweiten Dichtelements, das zwischen dem ersten Abschirmungselement und dem zweiten, also äußeren Lagerring wirkt, wird auch eine Schmiermittelleckage in demjenigen Bereich, in welchem das erste Abschirmungselement am zweiten Lagerring anliegt, vermieden.

Es sei hier darauf hingewiesen, dass selbstverständlich dieser Aspekt kombinierbar ist mit den vorangehend beschriebenen und das Schrägkugellager charakterisierenden Merkmalsgruppen.

Das zweite Dichtelement kann vorzugsweise in einen zwischen einer axialen Stirnfläche des Lagerrings und dem ersten Schenkelbereich des ersten Abschirmungselements gebildeten Zwischenraum eingreifend positioniert sein.

Um dabei eine noch verbesserte Dichtfunktionalität zu erreichen, wird vorgeschlagen, dass das zweite Dichtelement einen den zweiten Lagerring an seiner radialen Innenseite axial übergreifenden Dichtlippenbereich aufweist. Dieser Dichtlippenbereich wird sich fliehkraftbedingt verstärkt gegen die radiale Innenseite des zweiten Lagerrings anlegen und somit eine noch bessere Dichtwirkung erzielen.

Gemäß einem weiteren Aspekt der vorliegenden Erfindung wird die eingangs genannte Aufgabe gelöst durch ein Schrägkugellager mit dem grundsätzlichen Aufbau, wie eingangs erläutert. Dieses ist weiter dadurch gekennzeichnet, dass der ringartige Käfigkörper des Kugelkranzkäfigs im äußeren ersten Lagerinnenraum angeordnet ist und dass zwischen dem Käfigkörper und dem ersten Abschirmungselement oder/und dem zweiten Lagerring ein Schmiermittelzirkulationsraum gebildet ist.

Es sei auch hier betont, dass diese Aspekte selbstverständlich alleine oder in Kombination mit den vorangehend erläuterten charakterisierenden Aspekten des Schrägkugellagers vorgesehen sein können.

Durch das Anordnen des ringartigen Käfigkörpers im äußeren ersten Lagerinnenraum wird eine wesentlich kürzere axiale Erstreckung des gesamten Schrägkugellagers erzielt, da die ansonsten erforderliche axiale Staffelung des ersten Lagerrings mit dem ringartigen Käfigkörper hier nicht erforderlich ist. Dieser liegt tatsächlich dann radial außerhalb des ersten Lagerrings.

Um auch dann, wenn der ringartige Käfigkörper in dem äußeren ersten Lagerinnenraum vorhanden ist, also demjenigen Lagerinnenraum, in welchem das Schmiermittel sich vor allem durch Fliehkrafteinflüsse bevorzugt ansammeln wird und von welchem aus es dann wieder durch die rotierenden Lagerkugeln aufgenommen und zum Schmieren der Schräglagerflächen nach radial innen mitgenommen wird, diese Schmiermittelzirkulation nicht zu beeinträchtigen, wird weiter vorgeschlagen, dass an dem Käfigkörper wenigstens eine Schmiermittelströmungseinsenkung vorgesehen ist.

Gemäß einem weiteren Aspekt wird die eingangs genannte Aufgabe gelöst durch ein Schrägkugellager, das den vorangehend erläuterten grundsätzlichen Aufbau aufweist und weiterhin dadurch gekennzeichnet, ist dass ein zweites Abschirmungelement vorgesehen ist, welches einen zwischen dem ersten Lagerring und dem zweiten Lagerring gebildeten und zum inneren zweiten Lagerinnenraum offenen spaltartigen Zwischenraum radial innen überdeckt.

Auch dieser Aspekt kann selbstverständlich kombiniert werden mit einzelnen oder mehreren der vorangehend erläuterten und für das erfindungsgemäße Schrägkugellager charakteristischen Merkmalsgruppen.

Durch das Überdecken des spaltartigen Zwischenraums an seiner Innenseite wird der Eintritt von Verunreinigungen in den inneren zweiten Lagerringinnenraum und mithin das Schrägkugellager weitestgehend unterbunden.

Dabei kann beispielsweise vorgesehen sein, dass das zweite Abschirmungselement winkelartig ausgebildet ist und mit einem ersten Schenkelbereich den spaltartigen Zwischenraum radial überdeckt und mit einem zweiten Schenkelbereich den zweiten Lagerring an einer axialen Seite radial übergreift.

Gemäß einem weiteren besonders vorteilhaften Aspekt wird vorgeschlagen, dass das erste Abschirmungelement oder/und das zweite Abschirmungselement oder/und der zweite Lagerring einen mit Gleitlagermaterial überdeckten Abstützbereich für eine durch das Schrägkugellager zu lagernde Baugruppe bereitstellt. Es wurde festgestellt, dass aufgrund der allgemein und zwangsweise vorhandenen Massenträgheit der verschiedenen Bauteile des Schrägkugellagers vor allem bei Auftreten hochfrequenter Drehmomentschwankungen in einem Antriebsstrang die gewünschte Abwälzbewegung der Lagerkugeln nicht erfolgt. Dies kann zu einem erhöhten Verschleiß führen. Durch das Vorsehen von Gleitlagermaterial in demjenigen Abstützbereich, an welchem die durch das Schrägkugellager zu lagernde Baugruppe abgestützt ist, kann eine Gleitlagerflunktionalität bereitgestellt werden, so dass die an sich zur Erfüllung einer Wälzkörperlagerfunktionalität vorgesehenen Elemente des Schrägkugellagers von dieser Belastung befreit werden können.

Gemäß einem weiteren Aspekt betrifft die vorliegende Erfindung eine Axiallagerbaugruppe, insbesondere zur Axialabstützung einer Primärseite einer Torsionsschwingungsdämpferanordnung bezüglich einer Sekundärseite der Torsionsschwingungsdämpferanordnung in einem Fahrzeugantriebsstrang, umfassend in serieller Staffelung einen Wälzkörperlagerbereich und einen Gleitlagerbereich.

Bei dieser Axiallagerbaugruppe ist also eine serielle Staffelung, also serielle Wirkung einer Wälzkörperlagerung einerseits und einer Gleitlagerung andererseits vorgesehen. Je nach Art der auftretenden Relativdrehbewegung, insbesondere der Bewegungsfrequenz, wird dann entweder der Wälzkörperlagerbereich oder der Gleitlagerbereich oder ggf. beide Gleitlagerbereiche wirksam sein, was insbesondere bei hochfrequenter Belastung zu einer Entlastung des Wälzkörperlagerbereichs führt.

Der Wälzkörperlagerbereich kann vorteilhafterweise als Schrägkugellager ausgebildet sein, insbesondere als Schrägkugellager mit dem vorangehend erläuterten erfindungsgemäßen Aufbau.

Der Gleitlagerbereich kann Gleitlagermaterial an einem Abstützbereich des Schrägkugellagers für eine zu lagernde Baugruppe umfassen. Dieses Gleitlagermaterial kann PTFE-Material (Polytetrafluorethylen) umfassen, das allgemein auch als Teflon bekannt ist.

Gemäß einem weiteren Aspekt betrifft die vorliegende Erfindung eine Torsionsschwingungsdämpferanordnung für den Antriebsstrang eines Fahrzeugs, umfassend eine mit einem Antriebsorgan drehfest zu verbindende Primärseite und eine Sekundärseite, welche über eine Dämpferelementenanordnung zur Drehmomentübertragung mit der Primärseite und bezüglich dieser um eine Drehachse drehbar gekoppelt ist, wobei die Primärseite bezüglich der Sekundärseite durch ein erfindungsgemäß aufgebautes Schrägkugellager oder eine erfindungsgemäß aufgebaute Axiallagerbaugruppe gelagert ist.

Um innerhalb der Torsionsschwingungsdämpferanordnung eine größere Freiheit hinsichtlich der Positionierung der zur Lagerung dienenden Baugruppen zu erhalten, wird vorgeschlagen, dass die Primärseite einen winkelartig ausgebildeten Abstützring umfasst, welcher mit einem auf die Sekundärseite sich zu erstreckenden ersten Schenkelbereich den ersten Lagerring mit der ringartigen inneren Schräglagerfläche bildet. Hier wird nicht nur eine hohe Variabilität, sondern auch eine Funktionenverschmelzung mit der Folge eines einfachen Aufbaus erzielt.

Der Abstützring kann mit einem zweiten Schenkelbereich an einer weiteren Komponente der Primärseite oder/und dem Antriebsorgan festzulegen sein. Dieser zweite Schenkelbereich kann sich bezüglich des ersten Schenkelbereichs im Wesentlichen nach radial innen erstrecken.

Die Sekundärseite der Torsionsschwingungsdämpferanordnung kann ein Scheibenelement umfassen, das mit einem Gegen-Abstützbereich an einem Abstützbereich des Schrägkugellagers oder der Axiallageranordnung abgestützt ist.

Um dabei insbesondere die Axiallagerungsfunktionalität erzielen zu können, wird vorgeschlagen, dass der Gegen-Abstützbereich eine im Wesentlichen radial sich erstreckende erste Gegen-Abstützfläche aufweist, die an einer sich im Wesentlichen radial erstreckenden ersten Abstützfläche des Abstützbereichs im Wesentlichen in axialer Richtung abgestützt ist.

Gemäß einem weiteren besonders vorteilhaften Aspekt wird vorgeschlagen, dass der Gegen-Abstützbereich eine im Wesentlichen axial sich erstreckende zweite Gegen-Abstützfläche aufweist, die an einer sich im Wesentlichen axial erstreckenden zweiten Abstützfläche des Abstützbereichs im Wesentlichen in radialer Richtung abgestützt ist. Aufgrund seiner speziellen Ausgestaltung ist insbesondere ein Schrägkugellager nicht nur zur Übertragung axialer Kräfte, sondern auch zur Übertragung radialer Kräfte geeignet, so dass es zusätzlich auch noch die Funktionalität der Radiallagerung der Primärseite bezüglich der Sekundärseite übernehmen kann. Ein zusätzliches Radiallagerelement, wie z. B. ein im Stand der Technik hierfür allgemein eingesetztes Gleitlagerelement, ist dann nicht mehr erforderlich.

Die vorliegende Erfindung wird nachfolgend mit Bezug auf die beiliegenden Zeichnungen detailliert erläutert. Es zeigt:
- Fig. 1: eine Teil-Längsschnittansicht einer Torsionsschwingungsdämpferanordnung;
- Fig. 2: einen vergrößerten Bereich der Lagerung einer Primärseite bezüglich einer Sekundärseite;
- Fig. 3: eine Detailausschnittsansicht der in Fig. 2 gezeigten Lagerung;
- Fig. 4: eine der Fig. 2 entsprechende Ansicht einer alternativen Ausgestaltungsform der Lagerung;
- Fig. 5: eine weitere der Fig. 2 entsprechende Ansicht einer alternativen Ausgestaltungsform der Lagerung.

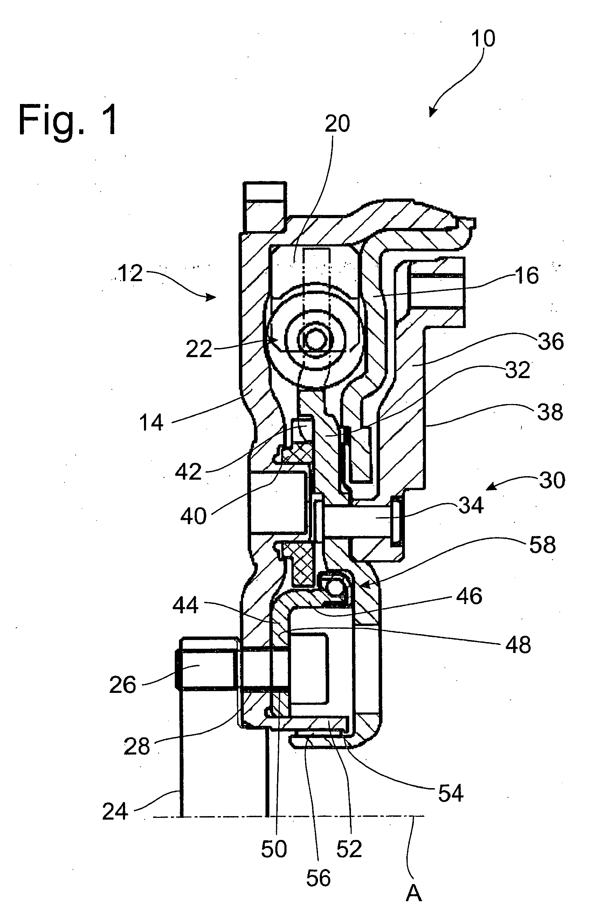

In Fig. 1 ist eine als Zweimassenschwungrad ausgebildete Torsionsschwingungsdämpferanordnung allgemein mit 10 bezeichnet. Diese umfasst eine Primärseite 12 mit zwei Deckscheibenelementen 14, 16. Die beiden Deckscheibenelemente 14, 16 sind radial außen zum Bereitstellen einer nach radial außen im Wesentlichen fluiddicht abgeschlossenen Kammer 20 miteinander verbunden. In dieser Kammer 20 ist die allgemein mit 22 bezeichnete Dämpferelementenanordnung vorgesehen. Diese kann mehrere Schraubendruckfedern umfassen, die in Umfangsrichtung aufeinander folgend, möglicherweise auch ineinander gestaffelt angeordnet sind. Radial innen ist das Deckscheibenelement 14 zur Festlegung an einer als Antriebsorgan wirksamen Antriebswelle 24 ausgebildet. Hierzu dienen mehrere Schraubbolzen 26, die durch entsprechende Öffnungen 28 im Deckscheibenelement 14 hindurchgeführt und in die Antriebswelle 24 eingeschraubt sind.

Eine Sekundärseite 30 der Torsionsschwingungsdämpferanordnung 10 umfasst ein mit einem radial äußeren Bereich zwischen die beiden Deckscheibenelemente 14, 16 bzw. in die Kammer 20 eingreifendes Zentralscheibenelement 32. Ebenso wie die Deckscheibenelemente 14, 16 wirkt dieses mit der Dämpferelementenanordnung 22 zusammen, so dass unter Kompression der Dämpferelementenanordnung 22 ein Drehmoment zwischen der Primärseite 12 und der Sekundärseite 30 übertragen werden kann, durch diese Kompressibilität jedoch auf die Primärseite 12 und die Sekundärseite 30 sich bezüglich einander um die Drehachse A drehen können.

Radial innerhalb des zweiten Deckscheibenelements 16 ist durch eine Mehrzahl von Nietbolzen 34 eine ringscheibenartige Schwungmasse 36 mit dem Zentralscheibenelement 32 verbunden. Diese Schwungmasse 36 dient einerseits zur Festlegung einer Druckplattenbaugruppe und stellt andererseits eine Reibfläche 38 für eine Kupplungsscheibe bereit.

Am Deckscheibenelement 14 sind in einem radial mittleren Bereich desselben mehrere Planetenräder 40 drehbar getragen. Diese stehen im Kämmeingriff mit einer am Zentralscheibenelement 32 durch Umformung desselben gebildeten Hohlradverzahnung 42. Bei Relativdrehung der Primärseite 12 bezüglich der Sekundärseite 30 wird auch eine Drehung der Planetenräder 34 erzwungen, was insbesondere dann, wenn diese Bewegungen in zumindest zum Teil in einem in der Kammer 20 enthaltenen viskosen Medium erfolgen, zur Schwingungsenergieabfuhr beiträgt.

Die Primärseite 12 umfasst einen im Schnitt winkelartig ausgebildeten Abstützring 44. Mit einem ersten Schenkelbereich 46 erstreckt sich dieser auf die Sekundärseite 30, nämlich das Zentralscheibenelement 32 derselben zu. Mit einem zweiten Schenkelbereich 48 erstreckt sich der Abstützring 44 ausgehend vom ersten Schenkelbereich 46 nach radial innen. Im zweiten Schenkelbereich 48 sind entsprechend den Öffnungen 28 im Deckscheibenelement 14 Öffnungen 50 gebildet, durch welche die Schraubbolzen 26 hindurchgeführt sind. Auf diese Art und Weise wird der Abstützring 44 zusammen mit dem Deckscheibenelement 14 an der Antriebswelle 24 festgelegt.

Eine radiale Zentrierung des Abstützrings 44 bezüglich des Zentralscheibenelements 14 wird durch einen am radial inneren Endbereich des Deckscheibenelements 14 gebildeten zylindrischen Ansatz 52 erlangt. Auch das Deckscheibenelement 32 weist in seinem radial inneren Endbereich einen derartigen zylindrischen Ansatz 54 auf, welcher den zylindrischen Ansatz 52 des Deckscheibenelements 14 radial innen übergreift und sich mit diesem axial überlappt. Zwischen diesen beiden zylindrischen Ansätzen 52, 54 ist bei der in Fig. 1 dargestellten Ausgestaltungsform ein ringartiges Gleitlagerelement 56 vorgesehen, durch welches die Primärseite 12 und die Sekundärseite 30 in radialer Richtung bezüglich einander abgestützt bzw. gelagert sein können.

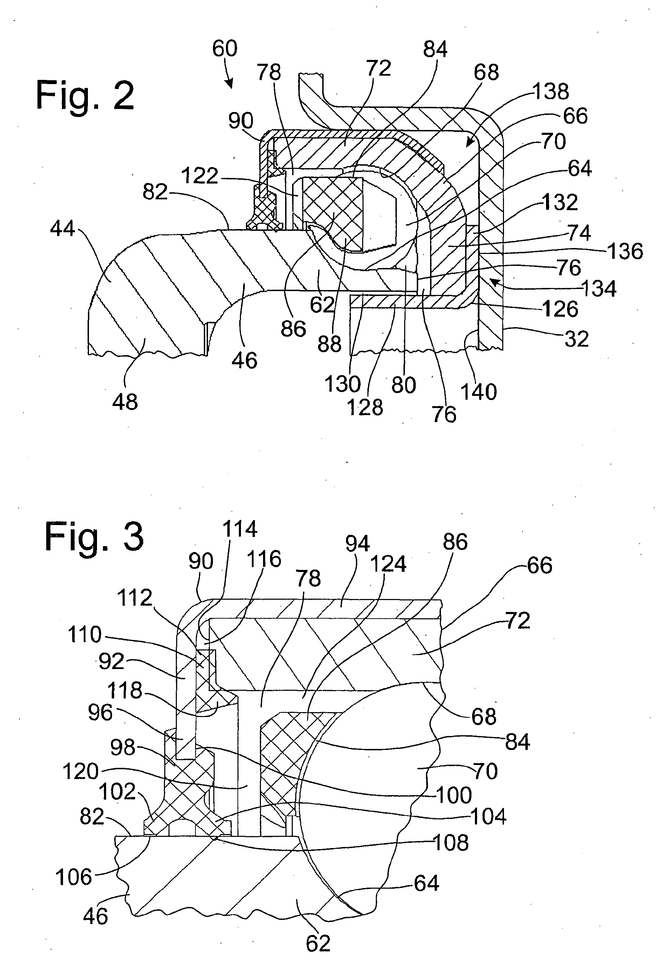

Die axiale Abstützung der Primärseite 12 bezüglich der Sekundärseite 30 erfolgt durch einen allgemein mit 58 bezeichneten Lagerbereich. Der Aufbau desselben wird im Folgenden unter Bezugnahme auch auf die Fig. 2 erläutert.

Man erkennt in Fig. 2, dass der Lagerbereich 58 ein nach Art eines Schrägkugellagers 60 ausgebildetes Wälzkörperlager umfasst. Dabei bildet der erste Schenkelbereich 46 des Abstützrings 44 mit seinem axialen Endbereich einen inneren ersten Lagerring 62, der eine ringartige innere Schräglagerfläche 64 bereitstellt. Ein im Schnitt ebenfalls winkelartig ausgebildeter äußerer zweiter Lagerring 66 stellt eine ringartige äußere Schräglagerfläche 68 bereit, welcher der inneren Schräglagerfläche 64 in axialer bzw. auch radialer Richtung schräg gegenüberliegt, also radial außerhalb dieser positioniert ist und axial bezüglich dieser versetzt liegt. Zwischen den beiden Schräglagerflächen 64, 68 sind in Umfangsrichtung aufeinander folgend mehrere Lagerkugeln 70 angeordnet, welche die Lagerkräfte übertragen und sich abwälzend entlang der jeweiligen Schräglagerflächen 64, 68 bewegen.

Der ringartige zweite Lagerring 66 liegt mit einem näherungsweise axial sich erstreckenden ersten Schenkelbereich 72 radial außerhalb des ersten Schenkelbereichs 46 des Abstützrings 44 und überlappt sich mit diesem insbesondere dort, wo der erste Lagerring 62 gebildet ist. Ein zweiter und im wesentlichen radial sich erstreckender Schenkelbereich 74 überdeckt eine axiale Stirnfläche 76 des ersten Schenkelbereichs 46 des Abstützrings 44 bzw. des ersten Lagerrings 62 unter Erzeugung eines spaltartigen Zwischenraums 76. Der zweite Schenkelbereich 74 des zweiten Lagerrings 66 endet in radialer Richtung geringfügüg innerhalb des ersten Schenkels 46 des Abstützrings 44.

Durch diese gegenseitige axiale und auch radiale Überlappung der Lagerringe 62, 66 sind beidseits der Lagerkugeln 70 liegende Lagerinnenräume 78, 80 gebildet. Der erste Lagerinnenraum 78 ist also zwischen einem Außenumfangsbereich 82 des Lagerrings 62 bzw. des ersten Schenkelbereichs 46 des Abstützrings 44 und dem zweiten Lagerring 66 bzw. dem ersten Schenkelbereich 72 desselben gebildet. Der zweite Lagerinnenraum 80, der also an der anderen axialen Seite der Lagerkugeln 70 liegt, ist etwas weiter innen positioniert und ist im Wesentlichen zwischen dem axialen Endbereich des ersten Lagerrings 62 und dem zweiten Schenkelbereich 74 des zweiten Lagerrings 66 gebildet. Der spaltartige Zwischenraum 76 ist zu diesem zweiten Lagerinnenraum 80 hin offen.

Das Schrägkugellager 60 umfasst ferner einen Kugelkranzkäfig 84. Dieser Kugelkranzkäfig 84 weist einen ringartigen Käfigkörper 86 auf, der im Wesentlichen im ersten Lagerinnenraum 78 liegt. Von diesem erstrecken sich näherungsweise in axialer Richtung mehrere Eingriffsabschnitte 88, welche zwischen die einzelnen Lagerkugeln 70 eingreifen und diese in definierter Umfangspositionierung zueinander halten. Während die beiden Lagerringe 62 und 66 insbesondere aufgrund der Tatsache, dass diese die Schräglagerflächen 64 und 68 bereitstellen, vorzugsweise aus Metallmaterial mit entsprechender Härte bzw. Oberflächengüte bereitgestellt sind, kann der Kugelkranzkäfig 84 aus Kosten- und auch aus Gewichtsgründen vorzugsweise aus Kunststoffmaterial aufgebaut sein.

Um einen im Wesentlichen fluiddichten Abschluss des ersten Lagerinnenraums 78 zu erlagen, ist ein in Fig. 3 auch deutlich erkennbares erstes Abschirmungselement 90 vorgesehen. Dieses ist mit winkelartiger Formgebung bereitgestellt mit einem ersten Schenkelbereich 92, der sich nach radial innen in Richtung auf den Außenumfangsbereich 82 des ersten Lagerrings 62 zu erstreckt. Ein zweiter Schenkelbereich 94 erstreckt sich näherungsweise axial und umgreift den zweiten Lagerring 66 radial außen. Das erste Abschirmungselement 90 kann beispielsweise als zylindrisches Blechteil bereitgestellt werden, das mit seiner Zylinderform auf den zweiten Lagerring 66 aufgeschoben wird und dann in einer Rollbearbeitung umgeformt wird, so dass einerseits der nach radial innen sich erstreckende erste Schenkelbereich 92 gebildet wird und andererseits der zweite Schenkelbereich 94 in seinem vom ersten Schenkelbereich 92 entfernt liegenden Endbereich angepasst an die dort gekrümmte Kontur des zweiten Lagerrings 66 nach radial innen verformt wird. Auf diese Art und Weise wird ein möglicherweise auch durch eine geringfügige Presspassung erreichter Festsitz des ersten Abschirmungselements 90 auf dem zweiten Lagerring 66 durch einen in axialer Richtung wirkenden Formschluss noch unterstützt.

An seinem dem Außenumfangsbereich 82 nahen Endbereich 96 trägt der erste Schenkelbereich 92 ein ringartiges, elastisches Dichtelmenet 98. Dieses weist in seinem Außenumfangsbereich eine nutartige Einsenkung 100, in welche der Endbereich 96 eingreifend positioniert ist, so dass durch diesen Umgriff ein dichter Abschluss erzeugt wird. In seinem dem Außenumfangsbereich 82 nahe liegenden Bereich weist das Dichtelement 98 zwei Dichtlippenabschnitte 102, 104 auf. Diese können jeweils näherungsweise zylindrisch geformte Dichtflächen 106 bzw. 108 aufweisen, die unter Erzeugung eines dichten Abschlusses des ersten Lagerinnenraums 78 am Außenumfangsbereich 82 des ersten Lagerrings 62 anliegen.

Ein zweites Dichtelement 110 stellt einen fluiddichten Abschluss zwischen dem zweiten Lagerring 66 und dem ersten Abschirmungselement 90 her. Dabei ist, wie man in Fig. 3 deutlich erkennt, das zweite Dichtelement 110, das selbstverständlich ebenfalls ringartig und aus elastischem Material aufgebaut sein kann, so positioniert, dass es mit einem näherungsweise radial sich erstreckenden Stegabschnitt 112 in einen zwischen einer Stirnfläche 114 des zweiten Lagerrings 66 bzw. des ersten Schenkelbereichs 72 desselben und dem ersten Schenkelbereich 92 des ersten Abschirmungselements 90 gebildeten Zwischenraum 116 eingreift. Dabei ist in Fig. 3 schematisch die nicht komprimierte Konfiguration des zweiten Dichtelements 110 dargestellt. Vor dem Umformen des ersten Abschirmungselements 90 kann also dieses ringartig ausgebildete zweite Dichtelement 110 an die Stirnfläche 114 des zweiten Lagerrings 66 angelegt werden. Beim Durchführen des Umformungsvorgangs des ersten Abschirmungselements 90 und dem dabei auftretenden Gestalten des ersten Schenkelbereichs 92 wird dann der Stegbereich 112 zwischen diesem ersten Schenkelbereich 92 und der Stirnfläche 114 komprimiert und somit unter Erzeugung eines dichten Abschlusses eingespannt. Dieser dichte Abschluss wird dadurch noch unterstützt, dass in seinem nach radial innen über den ersten Schenkelbereich 72 des zweiten Lagerrings 76 vorstehenden Bereich das zweite Dichtelement 110 einen Dichtlippenabschnitt 118 aufweist. Dieser übergreift den zweiten Lagerring 66 an seiner radialen Innenseite und wird somit insbesondere unter Fliehkrafteinwirkung auch verstärkt gegen diesen zweiten Lagerring 66 gepresst.

Es ist somit also ein fluiddichter Abschluss des ersten Lagerinnenraums 78 erzielbar. Dieser erste Lagerinnenraum 78 bildet im Rotationsbetrieb im Wesentlichen auch eine Schmiermittelkammer, in welcher das in dem Schrägkugellager 60 allgemein vorhandene Lagerschmiermittel sich fliehkraftbedingt ansammeln wird. Dabei kann das Schmiermittel sich nach radial außen in einem zwischen dem Käfigkörper 86 des Kugelkranzkäfigs 84 und den Dichtelementen 98, 110 bzw. dem ersten Schenkelbereich 92 des ersten Abschirmungselements 90 gebildeten Zwischenraum 120 nach radial außen bewegen. Um dieser Strömung möglichst wenig Hindernisse entgegenzusetzen, können in dem Käfigkörper 86 mehrere sich vorzugsweise nach radial außen erstreckende nutartige Einsenkungen 122 vorgesehen sein, die also einen größeren Strömungsquerschnitt ermöglichen. Radial außen angelangt kann das viskose Schmiermittel dann weiter in einen zwischen dem Außenumfangsbereich des Kugelkranzkäfigs 84 und dem zweiten Lagerring 66 bzw. dem ersten Schenkelbereich 72 desselben gebildeten Zwischenraum 124 gelangen. Dort kann es von den rotierenden Lagerkugeln 70 wieder aufgenommen und durch deren Rotation nach innen transportiert werden, so dass unter ausreichender Schmierung der Schräglagerflächen 64, 68 eine Schmiermittelumwälzung bzw. Zirkulation erreicht wird. Dabei führt insbesondere auch der durch Fliehkraft entstehende Druck in dem viskosen Schmiermittel im radial äußeren Brereich, also in dem Raumbereich 124 dazu, dass das Schmiermittel in den Bereich der äußeren Schräglagerfläche 68 gepresst wird. Man erkennt, dass ausgehend von der im Wesentlichen zylindrischen Innenoberfläche des Schenkelbereichs 72 die äußere Schräglagerfläche 68 zunächst nach radial außen verläuft, was die fliehkraftbedingte Bewegung des Schmiermittels aus dem Raumbereich 124 in den Bereich dieser Schräglagerfläche 68 noch begünstigt.

Um den Eintritt von Verunreinigungen in den Innenbereich des Schrägkugellagers 60 zu verhindern, ist ein in Fig. 2 erkennbares zweites Abschirmungselement 126 vorgesehen. Dieses ist ebenfalls mit ringartiger und gewinkelter Kontur ausgestaltet. Ein erster Schenkelbereich 128 erstreckt sich radial innerhalb des zweiten Schenkelbereichs 64 des zweiten Lagerrings 66 und an diesem beispielsweise unter geringer Pressung anliegend über den spaltartigen Zwischenraum 76 hinweg und auch noch über einen Teilbereich des ersten Lagerrings 62 bzw. des ersten Schenkelbereichs 46 des Abstützrings 44 hinweg. Unter Beibelassung eines geringfügigen und eine Relativbewegung zulassenden Spalts 130 ist hier also eine nach Art einer Spaltdichtung wirkende Abschlussformation erzielt, welche den vor allem auch fliehkraftindizierten Eintritt von Verunreinigungen in den spaltartigen Zwischenraum 76 verhindert.

Mit einem zweiten Schenkelbereich 132 stellt das zweite Abschirmungselement 126 im Wesentlichen einen Abstützbereich 134 des Schrägkugellagers 60 bereit. An diesem Abstützbereich 134 ist also eine im Wesentlichen radial sich erstreckende und in Umfangsrichtung umlaufende Abstützfläche 136 erzeugt, an welcher das Zentralscheibenelement 32 der Sekundärseite 30 mit einer in einem Gegen-Abstützbereich 138 desselben gebildeten Gegen-Abstützfläche 140 in axialer Richtung abgestützt. Eine zusätzliche Festlegung ist hier nicht erforderlich, da insbesondere die Radiallagerung durch das in Fig. 1 erkennbare Gleitlager 56 übernommen wird. Um hier eine Überbestimmung zu vermeiden, erkennt man, dass das im Bereich des Gegen-Abstützbereichs 138 abgewinkelt ausgestaltete Zentralscheibenelement 32 einen Abstand zum radial äußeren Bereich des Schrägkugellagers 60, insbesondere zum ersten Abschirmungselement 90 desselben, aufweist.

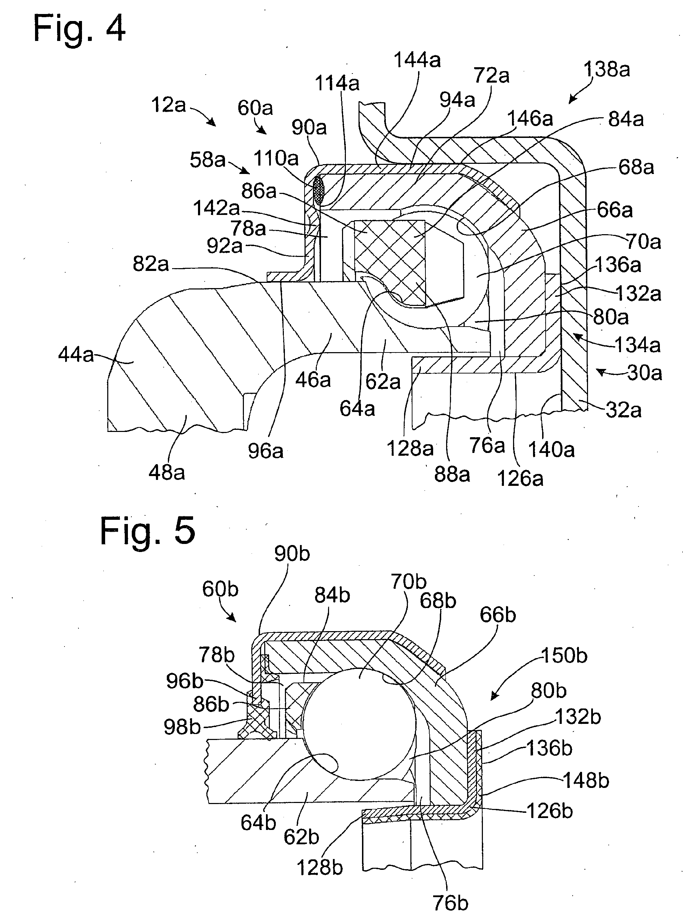

Eine abgewandelte Ausgestaltungsform des Lagerungsbereichs 58 ist in Fig. 4 dargestellt. Hier sind Komponenten bzw. Baugruppen, welche vorangehend beschriebenen Komponenten bzw. Baugruppen hinsichtlich Aufbau bzw. Funktion entsprechen, mit demselben Bezugszeichen unter Hinzufügung eines Anhangs "a" bezeichnet. Im Folgenden wird lediglich auf die im Vergleich zur vorangehend beschriebenen Ausgestaltungsform vorhandenen Unterschiede eingegangen.

Zunächst erkennt man in der Fig. 4, dass der erste Schenkelbereich 92a des ersten Abschirmungselements 90a in seinem dem Außenumfangsbereich 82a des ersten Lagerrings 62a nahen Endbereich 96a axial umgebogen ist, und zwar in Richtung vom ersten Lagerinnenraum 78a weg. Mit diesem Endbereich 96a liegt der erste Schenkelbereich 92a dem Außenumfangsbereich 82a mit geringem Abstand radial außen gegenüber, so dass hier eine Spaltdichtanordnung geschaffen ist. Das zweite Dichtelement 110a liegt wieder zwischen dem ersten Schenkelbereich 92a und der Stirnfläche 114a des zweiten Lagerrings 66a und ist dort beispielsweise unter Presspassung gehalten. Die Fig. 4 veranschaulicht, dass hier beispielsweise ein zweites Dichtelement 110a mit im unbelasteten Zustand näherungsweise kreisrundem Querschnitt eingesetzt werden kann, das im belasteten Zustand dann komprimiert wird. Um ein Ausweichen nach innen zu verhindern, kann im ersten Schenkelbereich 92a eine sickenartige Einsenkung 142a vorgesehen sein, die radial innerhalb des zweiten Dichtelements 110a liegt. Diese Einsenkung 142a kann in Umfangsrichtung durchlaufend sein, kann aber auch mehrere diskrete Einsenkungsabschnitte umfassen.

In Fig. 4 erkennt man weiterhin, dass das Zentralscheibenelement 32a dort, wo es mit seiner gewinkelten Konfiguration den Gegen-Abstützbereich 138a bereitstellt, nicht nur mit der Gegen-Abstützfläche 140a, die sich im Wesentlichen radial erstreckt und selbstverständlich eine Ringfläche ist, an der entsprechend orientierten und ebenfalls ringartig ausgestalteten Abstützfläche 136a am zweiten Abschirmungselement 126a anliegt. Vielmehr liegt das Zentralscheibenelement 32a auch mit einer im Wesentlichen axial sich erstreckenden und in Umfangsrichtung zylinderartig umlaufenden weiteren Gegen-Abstützfläche 144a an einer Außenumfangsfläche 146a des ersten Abschirmungselements 90a an. Auch diese ist in axialer Richtung sich erstreckend ausgebildet und in Umfangsrichtung umlaufend. Somit weist der Abstützbereich 134a des Schrägkugellagers 60a die beiden Abstützflächen 136a und 146a auf, von welchen die erstgenannte zur Abstützung in axialer Richtung dient und die zweitgenannte zur Abstützung in radialer Richtung dient. Dies bedeutet, dass bei dieser Ausgestaltungsvariante das Zentralscheibenelement 32a mit seinem Gegen-Abstützbereich 138a nicht nur in axialer, sondern auch in radialer Richtung durch das Schrägkugellager 60a bezüglich des Abstützrings 44a der Primärseite 12a gelagert ist. Auf das Vorsehen des in Fig. 1 mit 56 bezeichneten Gleitlagers kann somit also vollständig verzichtet werden.

Eine weitere Ausgestaltungsform ist in Fig. 5 gezeigt. Hier sind Komponenten, welche vorangehend beschriebenen Komponenten hinsichtlich Aufbau bzw. Funktion entsprechen, mit denselben Bezugszeichen unter Hinzufügung des Anhangs "b" bezeichnet. Da das in Fig. 5 gezeigte Schrägkugellager 60b im Wesentlichen dem vorangehend mit Bezug auf die Fig. 2 und 3 detailliert beschriebenen Schrägkugellager entspricht, wird im Wesentlichen auf die vorangehenden Ausführungen verwiesen. Im Folgenden wird lediglich auf die bestehenden Unterschiede eingegangen.

Man erkennt in Fig. 5, dass das zweite Abschirmungselement 126b mit einem Gleitlagermaterial 148b überdeckt ist. Dies kann durch Beschichten oder durch Aufbringen eines zuvor hergestellten Gleitlagerelements erfolgen. Dies führt dazu, dass nunmehr die Abstützfläche 136b nicht am zweiten Abschirmungselement 126b, sondern an dem nach radial außen sich erstreckenden Bereich des Gleitlagermaterials 148b gebildet ist. Dieses tritt dann in Lagerwechselwirkung mit der in Fig. 2 mit dem Bezugszeichen 140 bezeichneten Gegen-Abstützfläche des Zentralscheibenelements. Aufgrund der Tatsache, dass keine weitere feste Verbindung zwischen dem Schrägkugellager 60b und dem Zentralscheibenelement besteht, ist hier also in serieller Staffelung zu der Wälzkörperlagerfunktionalität des Schrägkugellagers 60b auch eine Gleitlagerungsfunktionalität einer allgemein mit 150b bezeichneten und im Wesentlichen das Gleitlagermaterial 148b umfassenden Gleitlagerungsanordnung vorgesehen. Dies ist insbesondere bei im Drehzustand auftretenden hochfrequenten Drehmomentschwankungen, die aufgrund der Lagerträgheit des Schrägkugellagers 60b nicht zu einer entsprechenden Abwälzbewegung der Lagerkugeln 70b führen, vorteilhaft. Infolgedessen kann eine übermäßige Beanspruchung des Schrägkugellagers 60b durch Einführen dieser Gleitlagerungsanordnung 150b vermieden werden, die derartige hochfrequente Drehmomentschwankungen durch entsprechende Relativgleitbewegung aufnehmen kann.

Hier ist selbstverständlich, dass dieser Aspekt des Bereitstellens von Gleitlagermaterial und mithin des Einführens einer Gleitlagerungsfunktionalität auch dann möglich ist, wenn, wie dies in Fig. 4 gezeigt ist, das Schrägkugellager 60b auch zur Radialabstützung dienen soll. In diesem Fall wäre dann zumindest der radial äußere Bereich des ersten Abschirmungselements 90b auch mit derartigem Gleitlagermaterial überdeckt. Auch Oberflächenbereiche des zweiten Lagerrings 66b, die zur unmittelbaren Abstützung des Zentralscheibenelements bzw. allgemein der Sekundärseite dienen können, können mit derartigem Gleitlagermaterial überdeckt bzw. beschichtet sein.

Es ist selbstverständlich, dass in verschiedenen Bereichen oder bei der Ausführung verschiedener Bauteile Änderungen vorgenommen werden können. So können beispielsweise die winkelartig ausgebildeten Abschirmungselemente nicht nur in einteiliger Form ausgestaltet sein, sondern können auch zum Bereitstellen dieser winkelartigen Kontur aus zwei oder mehreren Bauteilen zusammengefügt sein.

## Patentansprüche

1. Schrägkugellager, insbesondere zur Axialabstützung einer Primärseite einer Torsionsschwingungsdämpferanordnung bezüglich einer Sekundärseite der Torsionsschwingungsdämpferanordnung in einem Fahrzeugantriebsstrang, umfassend:
- einen ersten Lagerring (62; 62a; 62b) mit einer ringartigen inneren Schräglagerfläche (64; 64a; 64b),
- einen zweiten Lagerring (66; 66a; 66b) mit einer ringartigen äußeren Schräglagerfläche (68; 68a; 68b), welche der inneren Schräglagerfläche (64; 64a; 64b) radial außen und mit axialem Versatz gegenüber liegt,
- eine Mehrzahl von in Umfangsrichtung aufeinander folgenden Lagerkugeln (70; 70a; 70b), welche zwischen der inneren Schräglagerfläche (64; 64a; 64b) und der äußeren Schräglagerfläche (68; 68a; 68b) angeordnet sind,
- einen Kugelkranzkäfig (84; 84a; 84b) mit einem ringartigen Käfigkörper (86; 86a; 86b) und von diesem ausgehenden und zwischen benachbarte Lagerkugeln (70; 70a; 70b) eingreifenden Eingriffsabschnitten (88; 88a),
wobei radial außerhalb des ersten Lagerrings (62; 62a; 62b) an einer ersten axialen Seite der Lagerkugeln (70; 70a; 70b) ein äußerer erster Lagerinnenraum (78; 78a; 78b) gebildet ist und wobei an der anderen axialen Seite der Lagerkugeln (70; 70a; 70b) ein innerer zweiter Lagerraum (80; 80a; 80b) gebildet ist und wobei der äußere erste Lagerinnenraum (78; 78a; 78b) durch ein von dem zweiten Lagerring (66; 66a; 66b) auf einen Außenumfangsbereich (82; 82a; 82b) des ersten Lagerrings (62; 62a; 62b) sich zu erstreckendes erstes Abschirmungselement (90; 90a; 90b) begrenzt ist, wobei zwischen dem Außenumfangsbereich (82; 82a; 82b) des ersten Lagerrings (62; 62a; 62b) und dem diesem nahen Ende (96; 96a; 96b) des ersten Abschirmungselements (90; 90a; 90b) eine Dichtabschlussformation wirkt zum im Wesentlichen fluiddichten Abschließen des inneren ersten Lagerinnenraums,
**dadurch gekennzeichnet, dass** die Dichtabschlussformation ein ringartiges, elastisches erstes Dichtelement (98) umfasst, das am Außenumfangsbereich (82) des ersten Lagerrings (62) mit einer Mehrzahl von axial benachbarten Dichtlippenabschnitten (102, 104) anliegt.

2. Schrägkugellager nach Anspruch 1,
**dadurch gekennzeichnet, dass** das erste Dichtelement (98) an dem Außenumfangsbereich (82) mit zwei Dichtlippenabschnitten (102, 104) anliegt.

3. Schrägkugellager nach dem Oberbegriff des Anspruchs 1 oder einem der vorangehenden Ansprüche,
**dadurch gekennzeichnet, dass** das erste Abschirmungselement (90; 90a) winkelartig ausgebildet ist und mit einem ersten Schenkelbereich (92; 92a) sich auf den Außenumfangsbereich (82; 82a) des ersten Lagerrings (62; 62a) zu erstreckt und mit einem zweiten Schenkelbereich (94; 94a) den zweiten Lagerring (66; 66a) radial außen in axialer Richtung übergreift und dass ein ringartiges, elastisches zweites Dichtelement (110; 110a) einen im Wesentlichen fluiddichten Abschluss zwischen dem ersten Abschirmungelement (90; 90a) und dem zweiten Lagerring (66; 66a) erzeugt.

4. Schrägkugellager nach Anspruch 3,
**dadurch gekennzeichnet, dass** das zweite Dichtelement (110; 110a) in einen zwischen einer axialen Stirnfläche (114; 114a) des zweiten Lagerrings (66; 66a) und dem ersten Schenkelbereich (92; 92a) des ersten Abschirmungselements (90; 90a) gebildeten Zwischenraum (116) eingreifend positioniert ist.

5. Schrägkugellager nach Anspruch 3 oder 4,
**dadurch gekennzeichnet, dass** das zweite Dichtelement (110) einen den zweiten Lagerring (66) an seiner radialen Innenseite axial übergreifenden Dichtlippenbereich (118) aufweist.

6. Schrägkugellager nach dem Oberbegriff des Anspruchs 1 oder einem der vorangehenden Ansprüche,
**dadurch gekennzeichnet, dass** der ringartige Käfigkörper (86; 86a; 86b) des Kugelkranzkäfigs (84; 84a; 84b) im äußeren ersten Lagerinnenraum (78; 78a; 78b) angeordnet ist und dass zwischen dem Käfigkörper (86; 86a; 86b) und dem ersten Abschirmungselement (90; 90a; 90b) oder/und dem zweiten Lagerring (66; 66a; 66b) ein Schmiermittelzirkulationsraum (120; 124) gebildet ist.

7. Schrägkugellager nach Anspruch 6,
**dadurch gekennzeichnet, dass** an dem Käfigkörper (86) wenigstens eine Schmiermittelströmungseinsenkung (122) vorgesehen ist.

8. Schrägkugellager nach dem Oberbegriff des Anspruchs 1 oder einem der vorangehenden Ansprüche,
**dadurch gekennzeichnet, dass** ein zweites Abschirmungelement (126; 126a; 126b) vorgesehen ist, welches einen zwischen dem ersten Lagerring (62; 62a; 62b) und dem zweiten Lagerring (66; 66a; 66b) gebildeten und zum inneren zweiten Lagerinnenraum (80; 80a; 80b) offenen spaltartigen Zwischenraum (76; 76a; 76b) radial innen überdeckt.

9. Schrägkugellager nach Anspruch 8,
**dadurch gekennzeichnet, dass** das zweite Abschirmungselement (126; 126a; 126b) winkelartig ausgebildet ist und mit einem ersten Schenkelbereich (128; 128a; 128b) den spaltartigen Zwischenraum (76; 76a; 76b) radial überdeckt und mit einem zweiten Schenkelbereich (132; 132a; 132b) den zweiten Lagerring (66; 66a; 66b) an einer axialen Seite radial übergreift.

10. Schrägkugellager nach Anspruch 9,
**dadurch gekennzeichnet, dass** das erste Abschirmungelement oder/und das zweite Abschirmungselement (126b) oder/und der zweite Lagerring einen mit Gleitlagermaterial (148b) überdeckten Abstützbereich (134b) für eine durch das Schrägkugellager (60b) zu lagernde Baugruppe bereitstellt.

11. Axiallagerbaugruppe, insbesondere zur Axialabstützung einer Primärseite einer Torsionsschwingungsdämpferanordnung bezüglich einer Sekundärseite der Torsionsschwingungsdämpferanordnung in einem Fahrzeugantriebsstrang, umfassend in serieller Staffelung einen Wälzkörperlagerbereich (60b) und einen Gleitlagerbereich (150b).

12. Axiallagerbaugruppe nach Anspruch 11,
**dadurch gekennzeichnet, dass** der Wälzkörperlagerbereich (60b) ein Schrägkugellager (60b), insbesondere nach einem der vorangehenden Ansprüche, umfasst.

13. Axiallagerbaugruppe nach Anspruch 12,
**dadurch gekennzeichnet, dass** der Gleitlagerbereich (150b) Gleitlagermaterial (148b) an einem Abstützbereich (134b) des Schrägkugellagers (60b) für eine zu lagernde Baugruppe umfasst.

14. Axiallagerbaugruppe nach Anspruch 13,
**dadurch gekennzeichnet, dass** das Gleitlagermaterial (148b) PTFE-Material ist.

15. Torsionsschwingungsdämpferanordnung für den Antriebsstrang eines Fahrzeugs, umfassend eine mit einem Antriebsorgan (24) drehfest zu verbindende Primärseite (12) und eine Sekundärseite (30), welche über eine Dämpferelementenanordnung (22) zur Drehmomentübertragung mit der Primärseite (12) und bezüglich dieser um eine Drehachse (A) drehbar gekoppelt ist, wobei die Primärseite (12) bezüglich der Sekundärseite (30) durch ein Schrägkugellager (60) nach einem der Ansprüche 1 bis 10 oder eine Axiallagerbaugruppe (60, 150) nach einem der Ansprüche 11 bis 14 axial gelagert ist.

16. Torsionsschwingungsdämpferanordnung nach Anspruch 15,
**dadurch gekennzeichnet, dass** die Primärseite (12) einen winkelartig ausgebildeten Abstützring (44) umfasst, welcher mit einem auf die Sekundärseite (30) sich zu erstreckenden ersten Schenkelbereich (46) den ersten Lagerring (62) mit der ringartigen inneren Schräglagerfläche (64) bildet.

17. Torsionsschwingungsdämpferanordnung nach Anspruch 16,
**dadurch gekennzeichnet, dass** der Abstützring (44) mit einem zweiten Schenkelbereich (48) an einer weiteren Komponente (14) der Primärseite (12) oder/und dem Abtriebsorgan (24) festzulegen ist.

18. Torsionsschwingungsdämpferanordnung nach Anspruch 17,
**dadurch gekennzeichnet, dass** der zweite Schenkelbereich (48) bezüglich des ersten Schenkelbereichs (46) sich im Wesentlichen nach radial innen erstreckt.

19. Torsionsschwingungsdämpferanordnung nach einem der Ansprüche 15 bis 18,
**dadurch gekennzeichnet, dass** die Sekundärseite (30) ein Scheibenelement (32) umfasst, das mit einem Gegen-Abstützbereich (138) an einem Abstützbereich (134) des Schrägkugellagers (60) oder der Axiallageranordnung (60, 150) abgestützt ist.

20. Torsionsschwingungsdämpferanordnung nach Anspruch 19,
**dadurch gekennzeichnet, dass** der Gegen-Abstützbereich (138; 138a) eine im Wesentlichen radial sich erstreckende erste Gegen-Abstützfläche (140; 138a) aufweist, die an einer sich im Wesentlichen radial erstreckenden ersten Abstützfläche (136; 138a) des Abstützbereichs (134; 138a) im Wesentlichen in axialer Richtung abgestützt ist.

21. Torsionsschwingungsdämpferanordnung nach Anspruch 20,
**dadurch gekennzeichnet, dass** der Gegen-Abstützbereich (138a) eine im Wesentlichen axial sich erstreckende zweite Gegen-Abstützfläche (144a) aufweist, die an einer sich im Wesentlichen axial erstreckenden zweiten Abstützfläche (146a) des Abstützbereichs (134a) im Wesentlichen in radialer Richtung abgestützt ist.
